# EUROPEAN PATENT APPLICATION

(11) **EP 1 621 404 A1**
(43) Date of publication of application: **01.02.2006**
(21) Application number: 04077204.8
(22) Date of filing: 30.07.2004
(51) Int. Cl.: B60R 1/072, F16H 55/26, B62D 35/00, B60N 2/02, B60N 3/10, B60R 3/02, B60R 3/00, B60R 11/02, B60R 11/00

(54) **Motorized rack and pinion assembly**

(71) Applicant: Algonquin Automotive, Huntsville, Ontario P1H 1Z6 (CA)
(72) Inventor: Bradsen, Ross, Huntsville, Ontario P1H 2J2 (CA); Wale, Shawn, Orillia, Ontario (CA); Stegelmeier, Ulrich, Bracebridge, Ontario P1L 1B2 (CA); Smith, Rick, Huntsville, Ontario P1H 1M9 (CA); Keith, Nathan, Huntsville, Ontario P1H 1S4 (CA)
(74) Representative: Inspicos A/S

(57) **Abstract**

A motorized rack and pinion assembly (10) for use in a motor vehicle is provided having a housing (12) and a motor (20) mounted to the housing. A drivetrain (22) is disposed within the housing and is driven by the motor. A driveshaft (16) is engaged with the drivetrain and extends out from the housing. A pinion is fixed to an end of the driveshaft. The motorized rack and pinion assembly further includes an extending member having a rack bar fixed thereon. The pinion of the driveshaft is meshingly engaged with the rack bar of the extending member. The motor drives the drivetrain, the drivetrain rotates the driveshaft and therefore the pinion, and the pinion engages the rack bar thereby moving the extending member between the retracted position and the extended position.

## Description

### FIELD OF THE INVENTION

The present invention relates to a rack and pinion assembly and more particularly to a motorized rack and pinion assembly for a motor vehicle.

### BACKGROUND OF THE INVENTION

Over the years, there has been a trend in the automotive industry to install an ever increasing number of components, add-ons, and accessories into and onto the typical motor vehicle. However, every component that is added must strike a balance between space and utility within the limited size, shape, and weight requirements of a typical motor vehicle. For example, running boards are a very popular component on SUV's, utility trucks, and other large vehicles. For the running board to be most effective, it must be installed such that it extends out from the motor vehicle to such a degree that a large foothold area is presented. However, a running board that extends to such a degree can then pose a hazard to pedestrians or other motor vehicles as it increases the effective width of the motor vehicle.

The cup holder is also another popular component in motor vehicles. The cup holder is most useful when it extends out from the instrument panel and near enough to an occupant such that it may be easily reached. However, when the cup holder is not in use, such a location can become a nuisance to an occupant of the motor vehicle rather than useful. Moreover, an extended cup holder can be easily damaged and can even cause injury.

Air dams are a component used to reduce the air drag on a motor vehicle. To be most effective, the air dam must be positioned close to the surface over which the motor vehicle is traveling. Over roads that are relatively smooth, such as paved streets and highways, the air dam can be fairly close to the ground. However, dirt roads, rough streets, or even hilly streets can potentially damage an air dam that is too close to the surface.

Other commonly installed components include vehicle navigation systems, spoilers, and mirrors. However, as with the components mentioned above, due to the space limitations inherent in a motor vehicle, many of these components are either placed in such a way as to be a nuisance in the operation of the motor vehicle, or placed in such a way as to be less useful than would be ideal. There is a need in the art for a system that can automatically position motor vehicle components from a stored position to an extended position where the components can be fully utilized.

Therefore, it is an object of the present invention to provide the art with a motorized assembly that automatically moves vehicle components or accessories to retracted and extended positions.

### SUMMARY OF THE INVENTION

The present invention provides the art with a motorized rack and pinion assembly for use in a motor vehicle having a housing and a motor mounted to the housing. A drivetrain is disposed within the housing and is driven by the motor. A driveshaft is engaged with the drivetrain and extends out from the housing. A pinion is fixed to an end of the driveshaft. The motorized rack and pinion assembly further includes an extending member having a rack bar fixed thereon. The pinion of the driveshaft is meshingly engaged with the rack bar of the extending member. The motor drives the drivetrain, the drivetrain rotates the driveshaft and therefore the pinion, and the pinion engages the rack bar thereby moving the extending member between the retracted position and the extended position.

The motorized rack and pinion assembly may be used in any number of ways. A cup holder, a mirror, a spoiler, a running board, an air dam, and a display screen are all examples of items that can be fixed to the extending member and moved between the retracted position and the extended position.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a perspective view of a motorized rack and pinion assembly according to the principles of the present invention;

Figure 2 is an enlarged exploded view of the motor housing according to the principles of the present invention;

Figure 3 is an enlarged view of the slider assembly according to the principles of the present invention;

Figure 4 is an enlarged cross-sectional view of the slider assembly according to the principles of the present invention;

Figure 5 is an enlarged view of the extending member according to the principles of the present invention;

Figure 6 is a perspective view of the motorized rack and pinion assembly with a spoiler according to the principles of the present invention;

Figure 7 is a perspective view of the motorized rack and pinion assembly with a cup holder according to the principles of the present invention;

Figure 8 is a perspective view of the motorized rack and pinion assembly with a mirror according to the principles of the present invention;

Figure 9 is a perspective view of the motorized rack and pinion assembly with a running board according to the principles of the present invention;

Figure 10 is a perspective view of the motorized rack and pinion assembly with an air dam according to the principles of the present invention; and

Figure 11 is a perspective view of the motorized rack and pinion assembly with a display screen according to the principles of the present invention.

### DETAILED DESCRIPTION OF THE PREFERRED EMBODIMENTS

The following description of the preferred embodiment(s) is merely exemplary in nature and is in no way intended to limit the invention, its application, or uses.

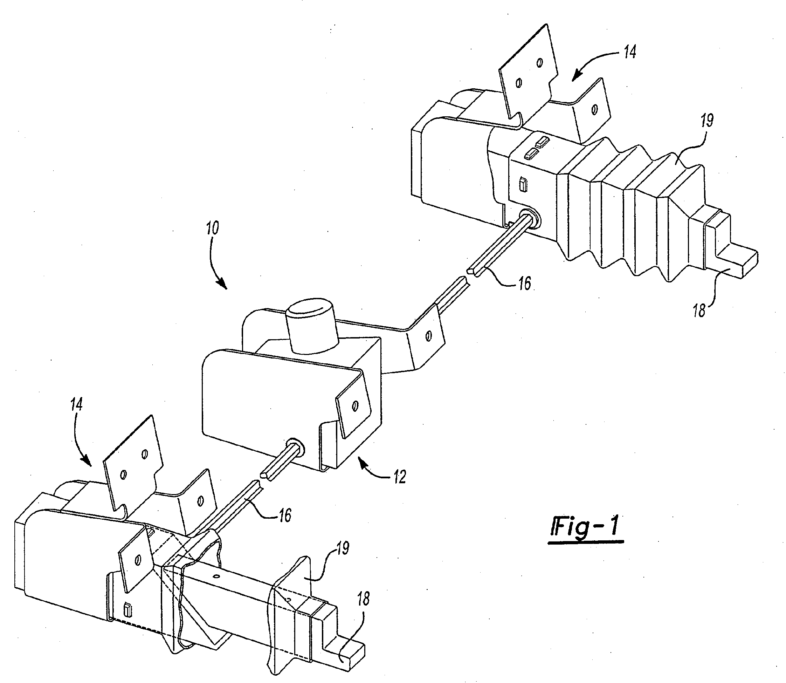

Referring now to the drawings in which like reference numerals designate like or corresponding parts throughout the several views, there is shown in Figure 1 a motorized rack and pinion assembly 10 according to the principles of the present invention. Rack and pinion assembly 10 includes a motor housing 12 and a slider assembly 14 connected by a driveshaft 16. An extending member 18 extends out from slider assembly 14 for receiving various motor vehicle components, as will be described in greater detail below. A flexible boot 19 mounted to extending member 18 and slider assembly 14 protects the slider assembly 14 from debris. While in the example provided a pair of slider assemblies 14, a pair of driveshafts 16, a pair of extending members 18, and a pair of flexible boots 19 are shown, it us to be understood that one slider assembly 14, one driveshaft 16, and one extending member 18 may be employed without departing from the scope of the claimed invention.

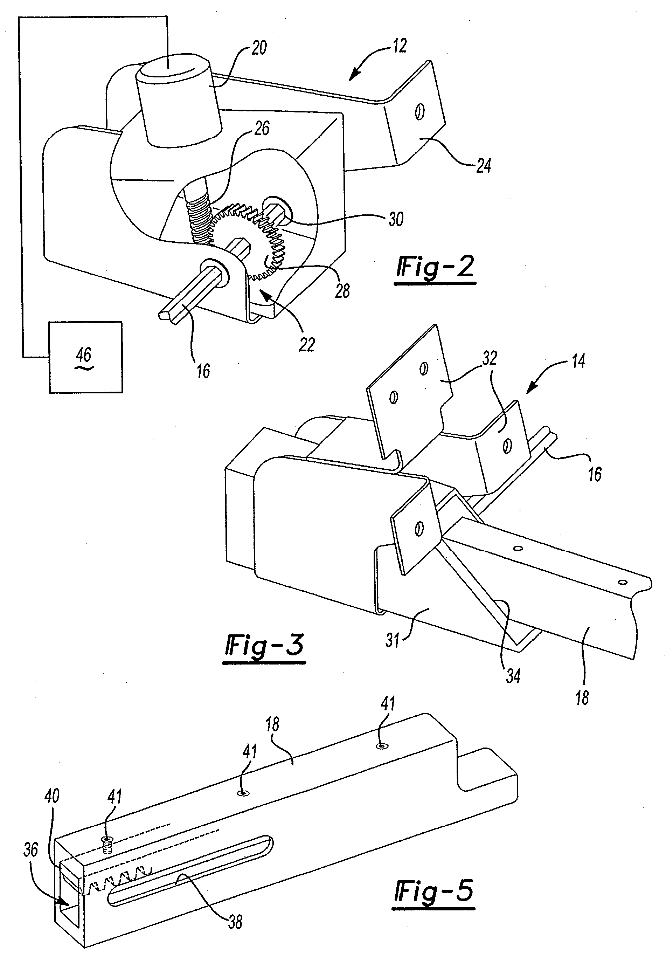

Referring now to Figure 2, motor housing 12 includes a motor 20 mounted to motor housing 12 and a drivetrain 22 disposed within motor housing 12. Motor 20 is preferably an electric motor as is well known in the art, however, various other types of motors may be employed. Motor 20 drives drivetrain 22 which in turn rotates driveshaft 16. Motor housing 12 has mounting brackets 24 that allow motor housing 12 to be mounted in various locations, as will be described below.

In the particular example provided, drivetrain 22 includes a worm gear 26 meshingly engaged with a drive gear 28. However, it is to be understood that various other drivetrains may be employed, for example a sprocket and chain arrangement. Worm gear 26 is driven by motor 20 which in turn meshingly engages and rotates drive gear 28. Drive gear 28 is fixed to driveshaft 16 and rotates driveshaft 16. Driveshaft 16 extends out from motor housing 12 through an aperture 30 and connects to slider assembly 14. For exemplary purposes, driveshaft 16 is illustrated as having a hexagonal cross-section, but it is to be understood that various other cross-sections can be utilized.

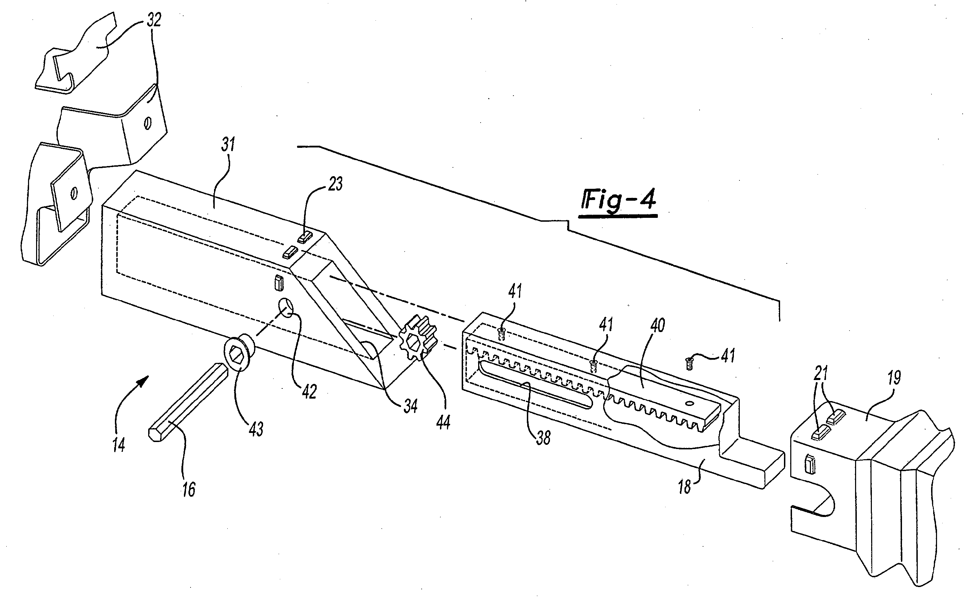

Referring now to Figures 3-5, slider assembly 14 includes a fixed member 31 having a plurality of mounting brackets 32 and a sheave 34 for receiving extending member 18. Extending member 18 is slideable within sheave 34 of slider assembly 14. Extending member 18 defines a cavity 36 and has a slot 38 formed in one side. A rack bar 40 is mounted within cavity 36 and aligned with slot 38. In the particular example provided, rack bar 40 is shown to be mounted to extending member 18 by a plurality of screws 41. However, it is to be understood that various other means of mounting rack bar 40 to extending member 18 may be employed, for example adhesives, bolts, or clamps. Flexible boot 19 is mounted to the slider assembly 14 and receives the extending member 18. In the particular example illustrated, flexible boot 19 includes grooves 21 formed therein for receiving tabs 23 formed on slider assembly 14, thereby fixing flexible boot 19 to slider assembly 14. However, various other methods of securing flexible boot 19 to slider assembly 14 may be employed, for example a seal, screws, or an adhesive.

Driveshaft 16 extends through an aperture 42 formed on a side of slider assembly 14 and through slot 38 of extending member 18. A sleeve 43 mounted within aperture 42 having an inner surface keyed to the hexagonal driveshaft 16 and a cylindrical outer surface allows driveshaft 16 to freely rotate within aperture 42. A pinion 44 is mounted on an end of driveshaft 16 within the cavity 36 of the extending member 18. Pinion 44 is meshingly engaged with rack bar 40.

During operation of the rack and pinion assembly 10, motor 20 rotates worm gear 26 which in turn rotates drive gear 28. Drive gear 28 rotates driveshaft 16 which rotates pinion 44. Pinion 44 meshingly engages rack bar 40 which forces extending member 18 from a retracted position within the slider assembly 14 to an extended position. As extending member 18 moves from the retracted position to the extended position, driveshaft 16 and pinion 44 move along slot 38 of extending member 18. Flexible boot 19 unfolds as extending member 18 is extended, and folds as extending member 18 is retracted, thereby keeping a constant seal between slider assembly 14 and extending member 18. If extending member 18 is obstructed moving between the extended position and the retracted position, a spike in electrical amperage is created within motor 20. This spike is sensed by a controller 46 in communication with motor 20 which automatically deactivates motor 20, thereby preventing injury during operation of the motorized rack and pinion assembly 10.

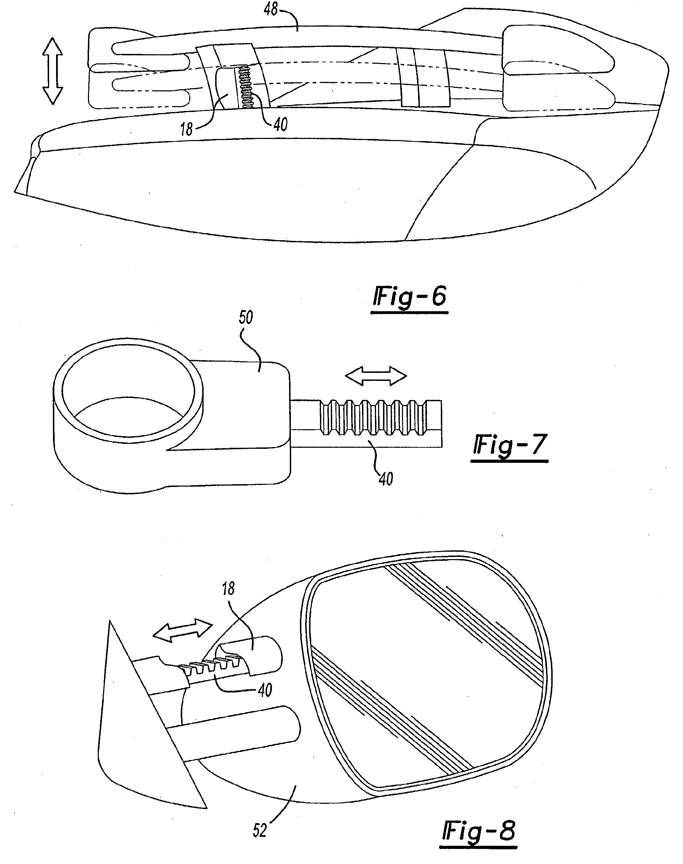

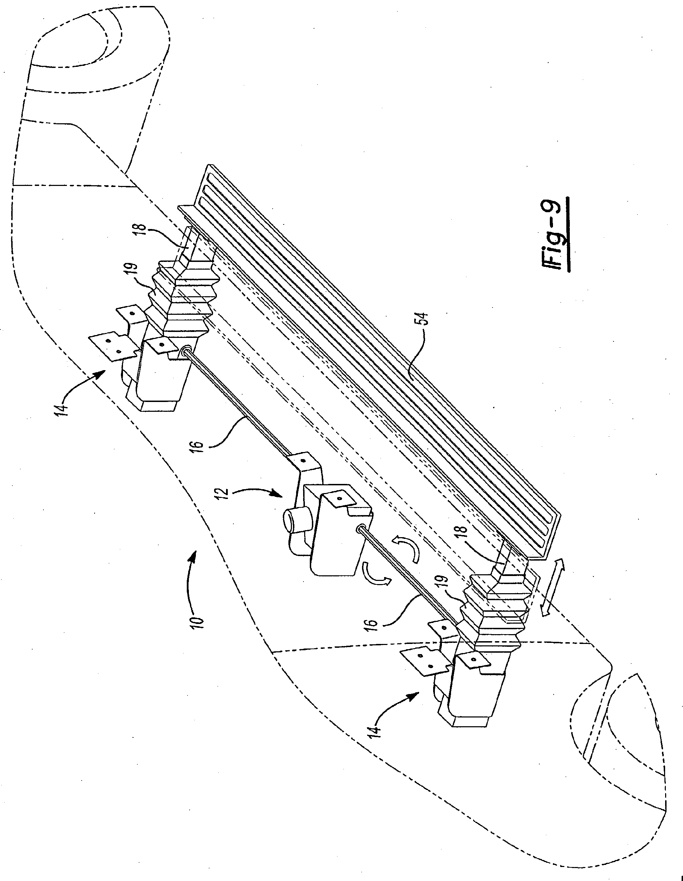

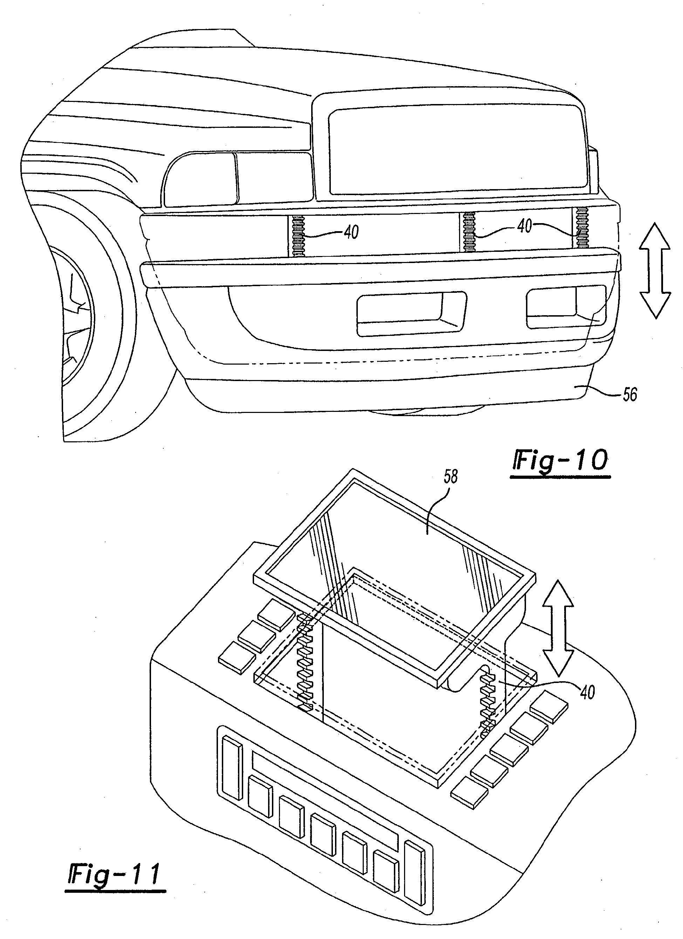

Motorized rack and pinion assembly 10 can be employed in many different configurations using various attached components. In one embodiment, motorized rack and pinion assembly 10 can be mounted on the back of motor vehicle and a spoiler 48 fixed to rack bar 40 and extending member 18, as seen in Figure 6. In another embodiment, a cup holder 50 can be fixed to rack bar 40 as seen in Figure 7. In a further embodiment, a side mirror 52 on a motor vehicle can be fixed to rack bar 40 and extending member 18, as seen in Figure 8. In still another embodiment, motorized rack an pinion assembly 10 can be mounted underneath a motor vehicle using flanges 32 and 34. A running board 54 is fixed to extending member 18, as seen in Figure 9. In still another embodiment, motorized rack an pinion assembly 10 can be mounted on the front of a motor vehicle and an air dam 56 fixed to rack bar 40, as seen in Figure 10. Finally, motorized rack and pinion assembly 10 can be mounted within an instrument panel of a motor vehicle and a display screen 58 of a vehicle navigation system fixed to rack bar 40, as seen in Figure 11. Other various attachments not specifically shown may also be employed, and the present invention should not be limited to the above examples.

The description of the invention is merely exemplary in nature and, thus, variations that do not depart from the gist of the invention are intended to be within the scope of the invention. Such variations are not to be regarded as a departure from the spirit and scope of the invention.

## Claims

1. A motorized rack and pinion assembly comprising:
a motor;
a drivetrain connected to said motor;
a slider assembly comprising a fixed member and an extending member;
a driveshaft connected to the drivetrain;
a pinion connected to the driveshaft;
a rack attached to the fixed member; and
said pinion meshingly engaged with said rack.

2. The motorized rack and pinion assembly of Claim 1, wherein said slider assembly includes a flexible member connected to said fixed member and said extending member.

3. The motorized rack and pinion assembly of Claim 1 or 2, wherein said driveshaft is a hex bar.

4. The motorized rack and pinion assembly of any of Claims 1 - 3, wherein said drivetrain includes a worm gear driven by said motor and meshingly engaged with a drive gear, said drive gear rotating said driveshaft.

5. The motorized rack and pinion assembly of any of Claims 1 - 4, wherein said fixed member includes an aperture for receiving said driveshaft and said pinion, a sheave for receiving said extending member, and a mounting bracket.

6. The motorized rack and pinion assembly of Claim 5, wherein said rack bar is disposed within said extending member and said extending member has a slot in alignment with said aperture of said fixed member, said pinion and said driveshaft extending through said slot and through said aperture to meshingly engage said rack bar.

7. The motorized rack and pinion assembly of any of Claims 1 - 6, wherein said motor is an electric motor and obstruction of said extending member while in motion creates a spike in electrical amperage to said electric motor, said motorized rack and pinion assembly further comprising a controller for deactivating said electric motor in response to said spike.

8. A motorized rack and pinion assembly for use in a motor vehicle comprising:
a housing;
a motor mounted to said housing;
a drivetrain driven by said motor;
a driveshaft engaged with said drivetrain and extending out from said housing;
a pinion fixed to an end of said driveshaft; and
an extending member having a rack bar meshingly engaged with said pinion;
wherein said motor drives said drivetrain, said drivetrain rotates said driveshaft which rotates said pinion, and said pinion engages said rack bar thereby moving said extending member from a first position to a second position.

9. The motorized rack and pinion assembly of Claim 8, further comprising a flexible member surrounding said extending member.

10. The motorized rack and pinion assembly of Claim 8 OR 9, wherein said driveshaft is a hex bar.

11. The motorized rack and pinion assembly of any of Claims 8 - 10, wherein said drivetrain includes a worm gear driven by said motor and meshingly engaged with a drive gear, said drive gear rotating said driveshaft.

12. The motorized rack and pinion assembly of any of Claims 8 - 11, further comprising a slider assembly having an aperture for receiving said driveshaft and said pinion, a sheave for receiving said extending member, and a mounting bracket.

13. The motorized rack and pinion assembly of Claim 12, wherein said rack bar is disposed within said extending member and said extending member has a slot in alignment with said aperture of said slider assembly, said pinion and said driveshaft extending through said slot and through said aperture to meshingly engage said rack bar, and said pinion and said driveshaft moving along said slot as said extending member is moved from said first position to said second position.

14. The motorized rack and pinion assembly of any of Claims 8 - 13, wherein said motor is an electric motor and obstruction of said extending member while moving between said first position and said second position creates a spike in electrical amperage to said electric motor, said motorized rack and pinion assembly further comprising a controller for deactivating said electric motor in response to said spike.

15. The motorized rack and pinion assembly of any of Claims 8 - 14, wherein said extending member has a cup holder mounted thereon, said cup holder being in an extended position when said extending member is in said first position and being in a retracted position when said extending member is in said second position.

16. The motorized rack and pinion assembly of any of Claims 8 - 15, wherein said extending member has a mirror mounted thereon, said mirror being in an extended position when said extending member is in said first position and being in a retracted position when said extending member is in said second position.

17. The motorized rack and pinion assembly of any of Claims 8 - 16, wherein said extending member has a spoiler mounted thereon, said spoiler being in an extended position when said extending member is in said first position and being in a retracted position when said extending member is in said second position.

18. The motorized rack and pinion assembly of any of Claims 8 - 17, wherein said extending member has a running board mounted thereon, said running board extending beyond a side of the motor vehicle when said extending member is in said first position and said running board being in a retracted position when said extending member is in said second position.

19. The motorized rack and pinion assembly of any of Claims 8 - 18, wherein said extending member has an air dam mounted thereon, said air dam being in an extended position when said extending member is in said first position and being in a retracted position when said extending member is in said second position.

20. The motorized rack and pinion assembly of any of Claims 8 - 19, wherein said extending member has a display screen of a vehicle system mounted thereon in a panel of the motor vehicle, said display screen being in an extended position from the panel when said extending member is in said first position and being in a retracted position in the panel when said extending member is in said second position.
